# EUROPEAN PATENT SPECIFICATION

(11) **EP 1 854 840 B1**
(45) Date of publication and mention of the grant of the patent: **28.03.2012**
(21) Application number: 05710786.4
(22) Date of filing: 25.02.2005
(51) Int. Cl.: C08L 23/00, C08L 25/00, C08K 13/02, C08J 3/22

(54) **MASTER BATCH FOR RESINS**
MASTERBATCH FÜR HARZE
LOT PILOTE POUR RÉSINES

(43) Date of publication of application: 14.11.2007
(73) Proprietor: Sumitomo Chemical Company, Limited, Tokyo 104-8260 (JP)
(72) Inventor: KIMURA, Kenji, Osaka 5600021 (JP); SADA, Yoshinori, Ichihara-shi, Chiba 2990125 (JP)
(74) Representative: Duckworth, Timothy John
(86) International application number: PCT/JP2005/003654
(87) International publication number: WO 2006/090485

(56) References cited:
- EP-A- 0 823 435
- JP-A- 1 053 595
- JP-A- 8 113 672
- JP-A- 10 273 494
- JP-A- 2002 146 121
- JP-A- 2002 194 152
- JP-A- 2003 206 378
- JP-A- 2005 075 842
- DATABASE CA [Online] CHEMICAL ABSTRACTS SERVICE, COLUMBUS, OHIO, US; KAWAKAMI, SHIGENOBU: "Ethylene polymer compositions and stretched tapes and fibers containing them" XP002485482 retrieved from STN Database accession no. 2002:378582 -& JP 2002 146121 A (JAPAN POLYOLEFINE CO., LTD., JAPAN) 22 May 2002 (2002-05-22)
- DATABASE CA [Online] CHEMICAL ABSTRACTS SERVICE, COLUMBUS, OHIO, US; OBAYASHI, YOSHIAKI: "Thermally stable yellowing-resistant polyolefin compositions not soiling or corroding metals during processing, and moldings and films therefrom" XP002485483 retrieved from STN Database accession no. 2002:516386 -& JP 2002 194152 A (SUMITOMO CHEMICAL CO., LTD., JAPAN) 10 July 2002 (2002-07-10)
- DATABASE CA [Online] CHEMICAL ABSTRACTS SERVICE, COLUMBUS, OHIO, US; KAWASAKI, TOSHIHARU ET AL: "Rubber-modified styrene polymer compositions and their injection blow moldings" XP002485484 retrieved from STN Database accession no. 2003:559900 -& JP 2003 206378 A (A AND M STYREN CO., LTD., JAPAN; PS JAPAN CORPORATION) 22 July 2003 (2003-07-22)

## Description

### Technical Field

The present invention relates to a master batch for polyolefin or polystyrene-based resin, containing an antioxidant and excellent in preservation stability, and to a method for producing a polyolefin or polystyrene-based resin composition using this master batch.

### Background Technology

Japanese Patent Application Laid-Open (JP-A) No. 2002-146121 describes a polyethylene resin composition characterized by containing 0.01 to 1 part by weight of an antioxidant having a phosphite structure and a hindered phenol structure in the same molecule, 0.01 to 1 part by weight of a hydrotalcite type compound and/or 0.01 to 1 part by weight of a salt of II metal in the periodic table of higher fatty acid, based on 100 parts by weight of a polyethylene resin (see, claims). JP-A No. 10-273494 (see, claims and the like) discloses a resin composition containing, based on 100 parts by weight of an organic material, 0.05 to 0.15 parts by weight of a phosphorus-based stabilizer preventing thermal degradation or oxidative degradation of the organic material, and 0.05 parts by weight of calcium stearate or 1 part by weight of a hydrotalcite (see, examples described in paragraphs 110 to 121). Such a resin composition is produced by dry-blending a desired stabilizer in given amount into a resin powder before melt-kneading.

### Disclosure of the Invention

The composition for master batch resin of the present invention is excellent in preservation stability, and even if used after preservation for a long period of time, the polyolefin or polystyrene-based resin composition to be produced does not get deteriorated stability against thermal oxidation and the like, thus, the composition of master batch resin is industrially advantageous.

The present invention provides a master batch for producing a polyolefin or polystyrene-based resin composition, which master batch comprises: 100 parts by weight of a first polyolefin or polystyrene-based resin;
(A) 2 to 20 parts by weight of a compound of the formula (1) 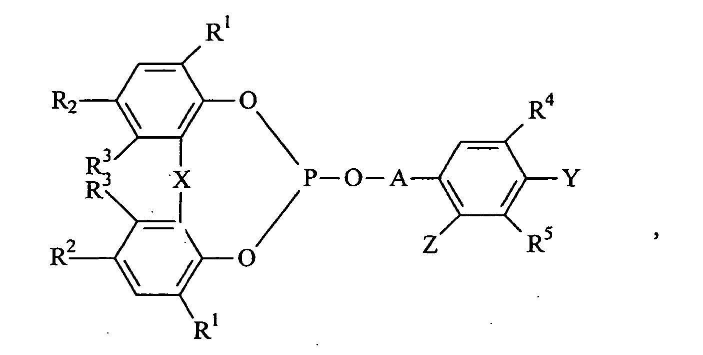 wherein R¹, R², R⁴ and R⁵ represent each independently a hydrogen atom, an alkyl group having 1 to 8 carbon atoms, a cycloalkyl group having 5 to 8 carbon atoms, an alkylcycloalkyl group having 6 to 12 carbon atoms, an aralkyl group having 7 to 12 carbon atoms or a phenyl group,
   R³ represents a hydrogen atom or an alkyl group having 1 to 8 carbon atoms.
   X represents a single bond, sulfur atom or -CHR⁶- group,
   R⁶ represents a hydrogen atom, an alkyl group having 1 to 8 carbon atoms or a cycloalkyl group having 5 to 8 carbon atoms.
   A represents an alkylene group having 2 to 8 carbon atoms or *-COR⁷- group, wherein
   the carbon-carbon bond in said alkylene group having 2 to 8 carbon atoms may be interrupted by an oxygen atom, sulfur atom, -NH-, -OCO- or -COO-,
   R⁷ represents a single bond or an alkylene group having 1 to 8 carbon atoms, and * indicates bonding to an oxygen atom of a phosphorous acid residue,
   one of Y and Z represents a hydroxyl group, an alkoxy group having 1 to 8 carbon atoms or an aralkyloxy group having 7 to 12 carbon atoms, and the other represents a hydrogen atom or an alkyl group having 1 to 8 carbon atoms, wherein when Y represents a hydroxyl group, one of R⁴ and R⁵ represents an alkyl group having 3 to 8 carbon atoms, a cycloalkyl group having 5 to 8 carbon atoms, an alkylcycloalkyl group having 6 to 12 carbon atoms, an aralkyl group having 7 to 12 carbon atoms or a phenyl group; and
   any one of:
- (B) a hydrotalcite type compound;
- (C) a salt of a Group II metal in the periodic table of higher fatty acid; and
- both (B) and (C);
wherein the total amount of (B) and (C) in the master batch is 0.05 to 0.5 parts by weight based on 100 parts by weight of polyolefin or polystyrene-based resin.

The present invention also provides a method for producing a master batch of the present invention, which method comprises kneading
100 parts by weight of a first polyolefin or polystyrene-based resin with

(A) 2 to 20 parts by weight of a compound of the formula (1) and any one of:
- (B) a hydrotalcite type compound;
- (C) a salt of a Group II metal in the periodic table of higher fatty acid; and
- both (B) and (C);
wherein the total amount of (B) and (C) in the master batch is 0.05 to 0.5 parts by weight based on 100 parts by weight of polyolefin or polystyrene-based resin.

The present invention still further provides a method for producing a polyolefin or polystyrene-based resin composition, which method comprises kneading a second polyolefin or polystyrene-based resin with a master batch of the present invention.

### Best Modes for Carrying Out the Invention

As the polyolefin or polystyrene which can be used in the master batch for polyolefin or polystyrene-based resin of the present invention (hereinafter, referred to as "master batch of the present invention"), and as the polyolefin or polystyrene-based resin suitable for compounding with this master batch, for example, the following resins are exemplified.
(1) homopolymers, block copolymers and random copolymers of ethylene, propylene, vinyl acetate, alpha-olefin, MMA , or copolymers composed of three or more monomers selected from these monomers
(2) homopolymers and block copolymers of styrene, acrylonitrile, butadiene, isoprene, MMA, or copolymers composed of three or more monomers selected from these monomers, or mixtures of these polymers

As the polyolefin or polystyrene-based resin for producing the master batch of the present invention, the above-exemplified resins can be used singly or in admixture.

Polymers using ethylene and propylene, or styrene, are used more suitably.

Specifically, resins such as polyethylene (for example, high density polyethylene (HD-PE), low density polyethylene (LD-PE), linear lower density polyethylene (LLDPE)) and polypropylene (for example, homo, block copolymer, random copolymer, terpolymer), ethylene/vinyl acetate copolymer (EVA), ethylene/methyl methacrylate copolymer (EMMA), acrylonitrile/butadiene/styrene copolymer (ABS), high-impact polystyrene (HI-PS), general purpose polystyrene (GP-PS), styrene/isoprene/butadiene copolymer (SIBS), styrene/butadiene block copolymer (SBS), styrene/isoprene copolymer (SIS), methacrylate/styrene copolymer (MS) and acrylonitrile/styrene copolymer (AS) are preferably used in the present invention. The method for producing the above-mentioned polyolefin or polystyrene-based resin is not particularly restricted, and those produced by known methods can be used.

Among the above-mentioned compounds (A) of the formula (1) , those in which R¹, R², R⁴ and R⁵ represent each independently a methyl group, t-butyl group, t-pentyl group or t-octyl are preferably used.

Those in which R³ represents a hydrogen atom or methyl group are preferable. Those in which X represents a single bond, methylene or ethylidene are preferable. A represents preferably an alkylene group having 2 to 4 carbon atoms or *-COR⁷- group.

When the carbon-carbon bond in the above-mentioned alkylene group having 2 to 4 carbon atoms is interrupted in mid-course, -OCO- or -COO- is preferable. R⁷ represents preferably an alkylene group having 1 to 4 carbon atoms. * indicates bonding to an oxygen atom of a phosphorous acid residue. When Y represents a hydroxyl group, it is preferable that Z represents a hydrogen atom or methyl group and one of R⁴ and R⁵ represents a t-butyl group.

When Z represents a hydroxyl group, it is preferable that R⁵ represents a methyl group, Y represents a hydrogen atom, and R⁴ represents a t-butyl group.

Of these compounds of the formula (1), particularly preferable specific compounds are exemplified below.

6-[3-(3-t-butyl-4-hydroxy-5-methylphenyl)propoxy]-2,4,8 10-tetra-t-butyldibenz[d,f][1,3,2]dioxaphosphepin [A1], 6-[3-(3,5-di-t-butyl-4-hydroxyphenyl)propoxy]-2,4,8,10-tetr a-t-butyldibenz[d,f][1,3,2]dioxaphosphepin, 6-[3-(3,5-di-t-butyl-4-hydroxyphenyl)propoxy]-4,8-di-t-buty 1-2,10-dimethyl-12H-dibenzo[d,g][1,3,2]dioxaphosphocin and 6-[3-(3,5-di-t-butyl-4-hydroxyphenyl)propionyloxy]-4,8-di-t -butyl-2,10-dimethyl-12H-dibenzo[d,g][1,3,2]dioxaphosphocin, are mentioned.

The master batch of the present invention is produced by compounding 2 parts by weight to 20 parts by weight of a compound of the formula (1) based on 100 parts by weight of a polyolefin or polystyrene-based resin.

The hydrotalcite type compound to be used in the master batch of the present invention includes hydrotalcite type compounds described in JP-A No. 2002-146121, paragraph 0055, and hydrotalcite type compounds described in JP-A No. 10-273494, paragraph 0050.

As the particularly preferable hydrotalcite type compounds to be used in the present invention, for example, hydrotalcites represented by the following formula are mentioned.

Mg₁₋ₓAlₓ(OH)₂(CO₃)_{x/2} · pH2O

(wherein, x represents a numerical value of 0 to 0.5, and p represents a numerical value of 0 to 2)

As the hydrotalcite type compound, synthetic hydrotalcite DHT-4A [B1] manufactured by Kyowa Chemical Industry Co., Ltd. is mentioned as a specific example.

The salt of II metal in the periodic table of higher fatty acid to be used in the master batch for polyolefin or polystyrene-based resin of the present invention includes calcium stearate [C1], zinc stearate [C2], magnesium stearate [C3] and calcium laurate [C4].

The hydrotalcite type compounds and the salts of II metal in the periodic table of higher fatty acid in the master batch for polyolefin or polystyrene-based resin of the present invention can be used each singly. These hydrotalcite type compounds and salts of II metal in the periodic table of higher fatty acid may each be used in combination of two or more.

The total use amount of the above-mentioned hydrotalcite type compound and salt of II metal in the periodic table of higher fatty acid is in the range of 0.05 to 0.5 parts by weight based on 100 parts by weight of a polyolefin or polystyrene-based resin.

Into the master batch of the present invention, if necessary, other neutralizing agents, other antioxidants, photo-stabilizers, lubricants, antistatic agents, pigments and anti-blocking agents can be further compounded to give a composite master batch.

The apparatus and method to be used for production of a master batch of the present invention are not particularly limited providing a compound of the formula (1), a hydrotalcite type compound and/or a salt of II metal in the periodic table of higher fatty acid can be compounded into a polyolefin or polystyrene-based resin before melt kneading by the apparatus and method. Specifically mentioned are, for example, methods in which a polyolefin or polystyrene-based resin, a compound of the formula (1), a hydrotalcite type compound and/or a salt of II metal in the periodic table, and the above-mentioned other antioxidants [for example, phenol-based antioxidants such as stearyl 3-(3,5-di-t-butyl-4-hydroxyphenyl)propionate, photo-stabilizers, lubricants, antistatic agents, pigments and anti-blocking agents to be used if necessary, are previously mixed uniformly by a mixing machine such as a tumbler blender, Henschel mixer or super mixer, then, the mixture is granulated by melt-kneading by a single-screw extruder or multi-screw extruder; methods in which melt-kneading is carried out by a kneader, Banbury mixer and the like, then, granulation is performed using an extruder; and the other methods.

Thus obtained master batch for polyolefin or polystyrene-based resin of the present invention is, due to excellent hydrolysis resistance, capable of preventing matters leading to cost up such as filling of a master batch in a moisture-proof type wrapping material and storage thereof, and even in the case of filling in a wrapping material and storage thereof, the master batch can be preserved also after opening of the wrapping material, thus, there is no need to finish up the master batch at one time. The master batch of the present invention is, usually, stored in a factory depository, then, the master batch of the present invention is compounded into a polyolefin or polystyrene-based resin in accordance with production timing of a polyolefin or polystyrene-based resin article, then, the compound is processed into a desired polyolefin or polystyrene-based resin article by melt-kneading.

In compounding the master batch of the present invention into a polyolefin or polystyrene-based resin, the master batch of the present invention can be used in an amount of X parts by weight based on (100-X) parts by weight of a polyolefin or polystyrene-based resin. X is not particularly restricted providing it is usually in the range of 0 to 100, and from the standpoint of uniform stabilizing effect and economy, X is preferably 0.1 to 33, particularly preferably 0.5 to 10.

The method and apparatus for compounding a master batch of the present invention before use for production of a desired polyolefin or polystyrene-based resin article are not particularly restricted providing a master batch for polyolefin or polystyrene-based resin of the present invention can be compounded, melt-kneaded, then, processed into a desired article by the method and apparatus. Specifically, there are mentioned methods in which, for example, a polyolefin or polystyrene-based resin, a master batch of the present invention, and if necessary, other master batches, for example, a pigment master batch and anti-blocking agent master batch, are previously mixed uniformly by a mixing machine such as, for example, a tumbler mixer, Henschel mixer or super mixer, then, the mixture is melt-kneaded by a single screw extruder or multi screw extruder, and subjected to T die film or inflation film processing, or processed into a molded material by metal molding, and other methods.

### Examples

The present invention will be illustrated in further detail by reference examples, comparative examples and examples below, but the present invention is not limited to these examples.

### [Production Example of master batch for polyolefin or polystyrene-based resin]

0.8 g of the above-mentioned antioxidant A1 (6-[3-(3-t-butyl-4-hydroxy-5-methylphenyl)propoxy]-2,4,8,10 -tetra-t-butyldibenz[d,f][1,3,2]dioxaphosphepin) and 40 mg of the above-mentioned compound C1 (calcium stearate) were weighed correctly and kneaded with 40 g of un-stabilized polyethylene for 3 minutes at a speed of 10 rpm at 160 QC under nitrogen flow using Laboplast mill type C manufactured by Toyo Seiki Seisakusho K.K. The resultant composition was taken out by a spatula, and directly after this, pressed to stretch into a sheet having a thickness of about 1 mm. This sheet was cut into pellets, producing a master batch for polyethylene resin.

### [Evaluation method for preservation stability]

The master batch for resin directly after production obtained in the above-mentioned Production Example and the master batch after preservation at 50 °C under a relative humidity of 80% were subjected to soxhlet extraction, respectively, to extract the antioxidant A1, and the content of the antioxidant in the master batch was analyzed by liquid chromatography. The content of A1 was traced by time when the content of A1 before preservation was 100.

### [Production of resin composition using master batch after preservation]

The master batch obtained in the above-mentioned Production Example was preserved for 2 weeks at 50 °C under a relative humidity of 80%, then, 39.2 g of un-stabilized polyethylene, 24 mg of the above-mentioned compound C1 (calcium stearate) and 24 mg of B1 hydrotalcite (hydrotalcite DHT-4A) were weighed correctly and kneaded with 0.8 g of the above-preserved master batch for 3 minutes at a speed of 10 rpm at 160 ºC under nitrogen flow using Laboplast mill type C manufactured by Toyo Seiki Seisakusho K.K. The resultant composition was taken out by a spatula, and directly after this, pressed to stretch into a sheet having a thickness of about 1 mm. This sheet was cut into pellets, producing a polyethylene resin composition. The formulation of the polyethylene resin composition produced in this production example is calculated to show that calcium stearate, hydrotalcite and the above-mentioned antioxidant A1 are contained in amounts of 0.06 parts by weight, 0.06 parts by weight and 0.1 part by weight, respectively, based on 100 parts by weight of polyethylene.

### [Evaluation method for stability of resin composition]

The polyethylene resin composition obtained in the above-mentioned Production Example was left under an air atmosphere at 210°C and time until initiation of heat generation was measured by DSC. Longer time until initiation of heat generation means higher stability against thermal oxidation (having higher antioxidant performance).

### Examples 1 to 5, Comparative Example 1, and Reference Example 1

In Examples 1 to 5, Comparative Example 1 and Reference Example 1, the master batches produced according to the above-mentioned Production Example were used.

In Tables 1 and 2 describing evaluation of hydrolysis resistance, ratios of polyethylene (PE), antioxidant and compounds added are represented by parts by weight when the amount of polyethylene is 100 parts.

**Table 1**

| | | Example 1 | Example 2 | Comparative Example 1 | Reference Example 1 |
|---|---|---|---|---|---|
| PE (parts by weight) | | 100 | 100 | 100 | 100 |
| A-1 (parts by weight) | | 2 | 2 | 2 | 0.2 |
| C-1 (parts by weight) | | 0.1 | | | |
| B-1 (parts by weight) | | | 0.1 | | |
| Retention (%) | 2 weeks | 100 | 100 | 16 | 100 |
| | 4 weeks | 96 | 93 | - | 100 |

**Table 2**

| | | Example 3 | Example 4 | Example 5 |
|---|---|---|---|---|
| PE (parts by weight) | | 100 | 100 | 100 |
| A-1 (parts by weight) | | 5 | 5 | 20 |
| C-1 (parts by weight) | | 0.1 | 0.1 | 0.1 |
| B-1 (parts by weight) | | | 0.1 | |
| Retention (%) | 2 weeks | 100 | 100 | 97 |
| | 4 weeks | 99 | 95 | 99 |

In Examples 6 to 10, Comparative Examples 2 to 3 and Reference Example 2, production was performed according to the above-mentioned production method of resin composition. With regard to resin compositions shown in Table 3, time until initiation of heat generation was measured by DSC according to the above-mentioned evaluation method for stability of resin composition. The results are shown in Table 3.

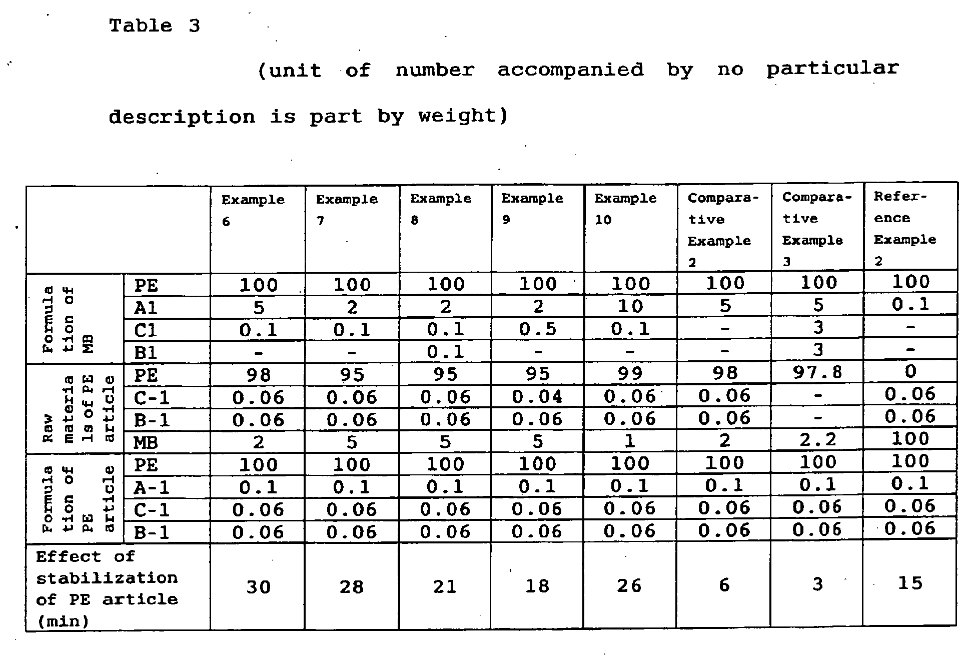

### Example 11

A master batch for polystyrene resin was produced in the same manner as in Production Example excepting that, in the above-mentioned Production Example for polyolefin-based resin or polystyrene-based resin, polyethylene was changed to GP-PS and the kneading temperature in Laboplast mill was changed to 200 ºC. A polystyrene resin composition was produced in the same manner excepting that this master batch for polystyrene resin was preserved for 2 hours at 50 °C under a relative humidity of 80%, and the kneading temperature in Laboplast mill in Production Example of resin composition from the above-mentioned master batch after preservation was changed to 200 °C. Stability of thus obtained polystyrene resin composition was measured by the same method as for the polyethylene composition.

| Example 11 | MB formulation of PS | | | Formulation of PS article | | | | Stabilization effect of PS article |
|---|---|---|---|---|---|---|---|---|
| | PS | A-1 | C-1 | PS | A-1 | B-1 | C-1 | |
| | 100 | 5 | 0.1 | 100 | 0.1 | 0.06 | 0.06 | 54 min |

### Industrial Applicability

The master batch for polyolefin or polystyrene-based resin of the present invention contains specific amount of a compound of the formula (1) and specific amount of one compound selected from hydrotalcite type compounds and/or salts of II metal in the periodic table, therefore, hydrolysis resistance of an antioxidant in the above-mentioned master batch is improved, and even if the master batch directly after production is preserved for a long period of time, its quality is not deteriorated. In the case of use of a master batch after preservation for a long period of time to produce a polyolefin or polystyrene-based resin article, an excellent stabilization effect (antioxidant performance) is shown.

## Claims

1. A master batch for producing a polyolefin or polystyrene-based resin composition, which master batch comprises: 100 parts by weight of a first polyolefin or polystyrene-based resin;(A) 2 to 20 parts by weight of a compound of the formula (1) 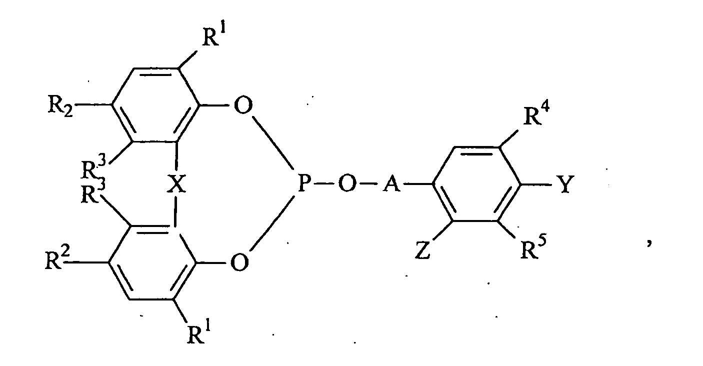 wherein R', R², R⁴ and R⁵ represent each independently a hydrogen atom, an alkyl group having 1 to 8 carbon atoms, a cycloalkyl group having 5 to 8 carbon atoms, an alkylcycloalkyl group having 6 to 12 carbon atoms, an aralkyl group having 7 to 12 carbon atoms or a phenyl group,
R³ represents a hydrogen atom or an alkyl group having 1 to 8 carbon atoms, X represents a single bond, sulfur atom or -CHR⁶- group,
R⁶ represents a hydrogen atom, an alkyl group having 1 to 8 carbon atoms or a cycloalkyl group having 5 to 8 carbon atoms,
A represents an alkylene group having 2 to 8 carbon atoms or *-COR⁷- group wherein
the carbon-carbon bond in said alkylene group having 2 to 8 carbon atoms may be interrupted by an oxygen atom, sulfur atom, -NH-, -OCO- or -COO-.
R⁷ represents a single bond or an alkylene group having 1 to 8 carbon atoms, and * indicates bonding to an oxygen atom of a phosphorous acid residue,
one of Y and Z represents a hydroxyl group, an alkoxy group having 1 to 8 carbon atoms or an aralkyloxy group having 7 to 12 carbon atoms, and the other
represents a hydrogen atom or an alkyl group having 1 to 8 carbon atoms, wherein when Y represents a hydroxyl group, one of R⁴ and R⁵ represents an alkyl group having 3 to 8 carbon atoms, a cycloalkyl group having 5 to 8 carbon atoms, an alkylcycloalkyl group having 6 to 12 carbon atoms, an aralkyl group having 7 to 12 carbon atoms or a phenyl group; and
any one of:
- (B) a hydrotalcite type compound;
- (C) a salt of a Group II metal in the periodic table of higher fatty acid; and
- both (B) and (C);
wherein the total amount of (B) and (C) in the master batch is 0.05 to 0.5 parts by weight based on 100 parts by weight of polyolefin or polystyrene-based resin.

2. A master batch according to claim 1 wherein the compound (A) of the formula (1) is 6-[3-(3-t-butyl-4-hydroxy-5-methylphenyl)propoxy]-2,4,8,10-tetra-t-butyldibenz[d,f] [1,3,2]dioxaphosphepin.

3. A master batch according to claim 1 or 2 wherein (C) is calcium stearate.

4. A method for producing a master batch according to any one of claims 1 to 3, which method comprises kneading
100 parts by weight of a first polyolefin or polystyrene-based resin with (A) 2 to 20 parts by weight of a compound of the formula (1) as defined in claim 1 or 2 and any one of:
- (B) a hydrotalcite type compound;
- (C) a salt of a Group II metal in the periodic table of higher fatty acid; and
- both (B) and (C);
wherein the total amount of (B) and (C) in the master batch is 0.05 to 0.5 parts by weight based on 100 parts by weight of polyolefin or polystyrene-based resin; and wherein (C) is as defined in claim 1 or 3.

5. A method for producing a polyolefin or polystyrene-based resin composition, which method comprises kneading a second polyolefin or polystyrene-based resin with a master batch as defined in any one of claims 1 to 3.

6. A production method according to claim 5 wherein the master batch is used in an amount of 0.1 to 50 parts by weight based on 100 parts by weight of the second polyolefin- or polystyrene-based resin.

## Patentansprüche

1. Masterbatch zum Herstellen einer polyolefin- oder polystyrolbasierten Harzzusammensetzung, wobei der Masterbatch umfasst: 100 Gewichtsteile eines ersten polyolefin- oder polystyrolbasierten Harzes;
(A) 2 bis 20 Gewichtsteile einer Verbindung der Formel (I) 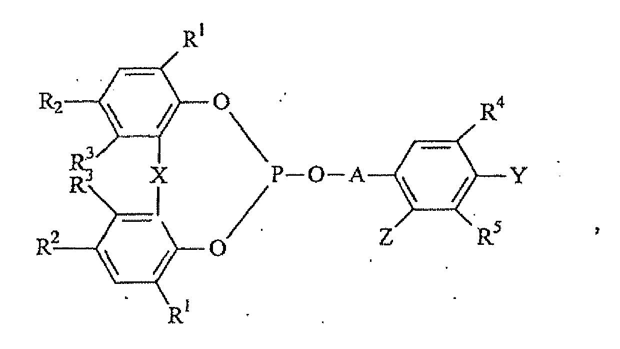 wobei R¹, R², R⁴ und R⁵ unabhängig voneinander jeweils ein Wasserstoffatom, eine Alkylgruppe mit 1 bis 8 Kohlenstoffatomen, eine Cycloalkylgruppe mit 5 bis 8 Kohlenstoffatomen, eine Alkylcycloalkylgruppe mit 6 bis 12 Kohlenstoffatomen, eine Aralkylgruppe mit 7 bis 12 Kohlenstoffatomen oder eine Phenylgruppe sind,
R³ ein Wasserstoffatom oder eine Alkylgruppe mit 1 bis 8 Kohlenstoffatomen ist,
X eine Einfachbindung, ein Schwefelatom oder eine -CHR³-Gruppe ist,
R⁶ ein Wasserstoffatom, eine Alkylgruppe mit 1 bis 8 Kohlenstoffatomen oder eine Cycloalkylgruppe mit 5 bis 8 Kohlenstoffatomen ist,
A eine Alkylengruppe mit 2 bis 8 Kohlenstoffatomen oder eine *-COR⁷-Gruppe ist, wobei
die Kohlenstoff-Kohlenstoffi-Bindung in der Alkylengruppe mit 2 bis 8 Kohlenstoffatomen von einem Sauerstoffatom, einem Schwefelatom, -NH-, -OCO- oder -COO- unterbrochen werden kann,
R⁷ eine Einfachbindung oder eine Alkylengruppe mit 1 bis 8 Kohlenstoffatomen ist und * eine Bindung zu einem Sauerstoffatom eines Phosphonsäurerestes angibt,
einer von Y oder Z eine Hydroxylgruppe, eine Alkoxygruppe mit 1 bis 8 Kohlenstoffatomen oder eine Aralkyloxygruppe mit 7 bis 12 Kohlenstoffatomen ist, und der andere ein Wasserstoffatom oder eine Alkylgruppe mit 1 bis 8 Kohlenstoffatomen ist, wobei wenn Y eine Hydroxylgruppe ist, einer von R⁴ und R⁵ eine Alkylgruppe mit 3 bis 8 Kohlenstoffatomen, eine Cycloalkylgruppe mit 5 bis 8 Kohlenstoffatomen, eine Alkylcycloalkylgruppe mit 6 bis 12 Kohlenstoffatomen und eine Aralkylgruppe mit 7 bis 12 Kohlenstoffatomen oder eine Phenylgruppe ist; und
eine
- (B) einer Verbindung vom Hydrotalcittyp;
- (C) eines Salzes eines Metalls der Gruppe II des Periodensystems einer höheren Fettsäure; und
- sowohl (B) als auch (C);
wobei die Gesamtmenge von (B) und (C) im Masterbatch 0,05 bis 0,5 Gewichtsteile basierend auf 100 Gewichtsteilen eines polyolefin- oder polystyrolbasierten Harzes ist.

2. Masterbatch nach Anspruch 1, wobei die Verbindung (A) der Formel (I) 6-[3-(3-t-Butyl-4-hydroxyl-5-methylphenyl)propoxy]-2,4,8,10-tetra-t-butyldibenz[d,f][1,3,2]dioxaphosphepin ist.

3. Masterbatch nach Anspruch 1 oder 2, wobei (C) Calciumstearat ist.

4. Verfahren zum Herstellen eines Masterbatches gemäß einem der Ansprüche 1 bis 3, wobei das Verfahren Kneten umfasst von100 Gewichtsteilen eines ersten polyolefin- oder polysystyrolbasierten Harzes mit (A) 2 bis 20 Gewichtsteilen einer Verbindung der Formel (1) gemäß Anspruch 1 oder 2 und eine
- (B) einer Verbindung vom Hydrotalcittyp;
- (C) eines Salzes eines Metalls der Gruppe II des Periodensystems einer höheren Fettsäure; und
- sowohl (B) als auch (C);
wobei die Gesamtmenge von (B) und (C) im Masterbatch 0,05 bis 0,5 Gewichtsteile basierend auf 100 Gewichtsteilen eines polyolefin- oder polystyrolbasierten Harzes ist; und wobei (C) wie in den Ansprüchen 1 oder 3 definiert ist.

5. Verfahren zum Herstellen einer polyolefin- oder polystyrolbasierten Harzzusammensetzung, wobei das Verfahren Kneten eines zweiten polyolefin-oder polystyrolbasierten Harzes mit einem Masterbatch nach einem der Ansprüche 1 bis 3 umfasst.

6. Herstellungsverfahren nach Anspruch 5, wobei der Masterbatch in einer Menge von 0,1 bis 50 Gewichtsteilen basierend auf 100 Gewichtsteilen des zweiten polyolefin- oder polystyrolbasierten Harzes verwendet wird.

## Revendications

1. Mélange mère pour la production d'une composition de résine à base de polyoléfine ou de polyester, lequel mélange mère comprend : 100 parties en masse d'une première résine à base de polyoléfine ou de polystyrène ;
(A) de 2 à 20 parties en masse d'un composé de la formule (1) 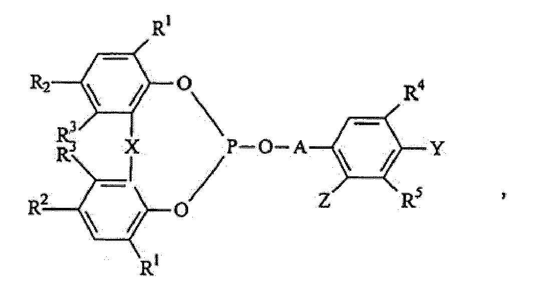 dans laquelle R¹, R², R⁴ et R⁵ représentent chacun indépendamment un atome d'hydrogène, un groupe alkyle ayant de 1 à 8 atomes de carbone, un groupe cycloalkyle ayant de 5 à 8 atomes de carbone, un groupe alkylcycloalkyle ayant de 6 à 12 atomes de carbone, un groupe aralkyle ayant de 7 à 12 atomes de carbone ou un groupe phényle,
R³ représente un atome d'hydrogène ou un groupe alkyle ayant de 1 à 8 atomes de carbone,
X représente une liaison simple, un atome de soufre ou un groupe -CHR⁶-,
R⁶ représente un atome d'hydrogène, un groupe alkyle ayant de 1 à 8 atomes de carbone ou un groupe cycloalkyle ayant de 5 à 8 atomes de carbone,
A représente un groupe alkylène ayant de 2 à 8 atomes de carbone ou un groupe *-COR⁷-, dans lequel
la liaison carbone-carbone dans ledit groupe alkylène ayant de 2 à 8 atomes de carbone peut être interrompue par un atome d'oxygène, un atome de soufre, -NH-, -OCO- ou -COO-,
R⁷ représente une liaison simple ou un groupe alkylène ayant de 1 à 8 atomes de carbone, et * indique une liaison à un atome d'oxygène d'un résidu d'acide phosphoreux,
un de Y et Z représentent un groupe hydroxyle, un groupe alcoxy ayant de 1 à 8 atomes de carbone ou un groupe aralkyloxy ayant de 7 à 12 atomes de carbone, et l'autre représente un atome d'hydrogène ou un groupe alkyle ayant de 1 à 8 atomes de carbone, dans lequel lorsque Y représente un groupe hydroxyle, l'un de R⁴ et R⁵ représente un groupe alkyle ayant de 3 à 8 atomes de carbone, un groupe cycloalkyle ayant de 5 à 8 atomes de carbone, un groupe alkylcycloalkyle ayant de 6 à 12 atomes de carbone, un groupe aralkyle ayant de 7 à 12 atomes de carbone ou un groupe phényle ; et
l'un parmi :
- (B) un composé de type hydrotalcite ;
- (C) un sel d'un métal du groupe II dans la classification périodique d'acide gras supérieur ; et
- à la fois (B) et (C) ;
dans lequel la quantité totale de (B) et (C) dans le mélange mère est de 0,05 à 0,5 partie en masse rapporté à 100 parties en masse d'une résine à base de polyoléfine ou de polystyrène.

2. Mélange mère selon la revendication 1, dans lequel le composé (A) de la formule (1) est la 6-[3-(3-t-butyl-4-hydroxy-5-méthylphényl)propoxy]-2,4,8,10-tétra-t-butyldibenz[d,f][1,3,2]dioxa-phosphépine.

3. Mélange mère selon la revendication 1 ou 2, dans lequel (C) est le stéarate de calcium.

4. Procédé de production d'un mélange mère selon l'une quelconque des revendications 1 à 3, lequel procédé comprend le malaxage
de 100 parties en masse d'une première résine à base de polyoléfine ou de polystyrène avec
(A) de 2 à 70 parties en masse d'un composé de la formule (1) comme défini dans la revendication 1 ou 2 et l'un parmi :
- (B) un composé de type hydrotalcite ;
- (C) un sel d'un métal du groupe II dans la classification périodique des éléments d'acide gras supérieur ; et
- à la fois (B) et (C) ;
dans lequel la quantité totale de (B) et (C) dans le mélange mère est de 0,05 à 0,5 partie en masse rapporté à 100 parties en masse d'une résine à base de polyoléfine ou de polystyrène ; et dans lequel (C) est comme défini dans la revendication 1 ou 3.

5. Procédé de production d'une résine à base de polyoléfine ou de polystyrène, lequel procédé comprend le malaxage d'une seconde résine à base de polyoléfine ou de polystyrène avec un mélange mère selon l'une quelconque des revendications 1 à 3.

6. Procédé de production selon la revendication 5, dans lequel le mélange mère est utilisé dans une quantité de 0,1 à 50 parties en masse rapporté à 100 parties en masse de la seconde résine à base de polyoléfine ou de polystyrène.
